# EUROPEAN PATENT APPLICATION

(11) **EP 4 717 525 A1**
(43) Date of publication of application: **01.04.2026**
(21) Application number: 25192296.9
(22) Date of filing: 28.07.2025
(51) Int. Cl.: B60R 16/02, H01R 12/78, H01R 12/70, H01R 12/77, H01R 12/88, H01R 12/89

(54) **CABLE HARNESS, HOUSING, AND HOUSING SET**

(30) Priority: 25.09.2024 JP 2024165763
(71) Applicant: Japan Aviation Electronics Industry, Limited, Tokyo 150-0043 (JP)
(72) Inventor: OKAMURA, Atsushi, Shibuya-ku, Tokyo, 150-0043 (JP)
(74) Representative: MERH-IP Matias Erny Reichl Hoffmann Patentanwälte PartG mbB

(57) **Abstract**

A housing includes a first side part accommodating part, a second side part accommodating part, a first end part accommodating part, and an accommodating cover part. A flexible wiring board is inserted from an opening until a first side part side of a first end part comes into contact with the first end part accommodating part, by causing a first protruding part to come into contact with a first engaging part before a second protruding part comes into contact with a second engaging part, and then the flexible wiring board is inserted such that a second side part side of the first end part comes into contact with the first end part accommodating part. In this case, a first locking arm part is joined to the accommodating cover part in such a way that the first locking arm part is shifted, due to the second protruding part coming into contact, from a first position at which movement of the second protruding part toward the first end part accommodating part is restricted, to a second position at which the movement is allowed.

## Description

### TECHNICAL FIELD

The present disclosure relates to a structure of a cable harness.

### BACKGROUND ART

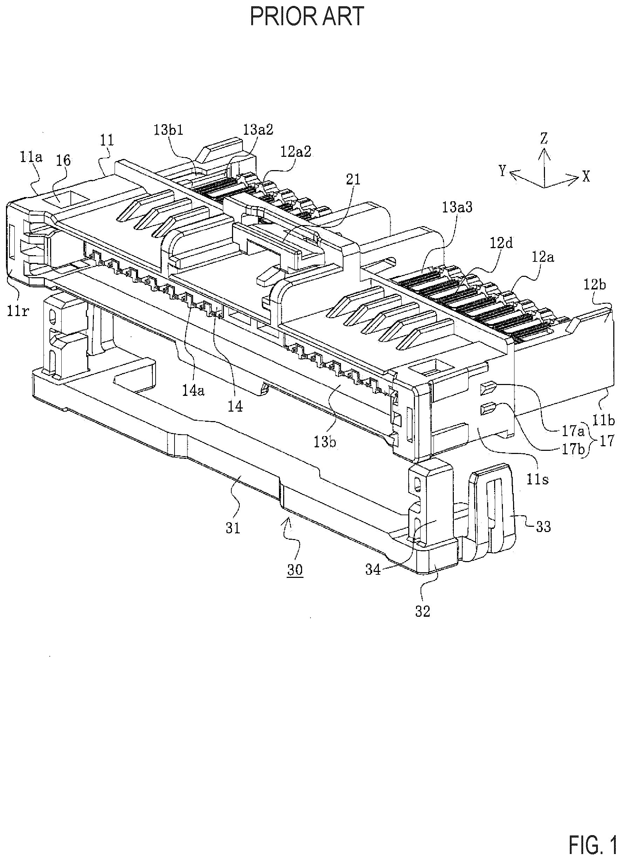

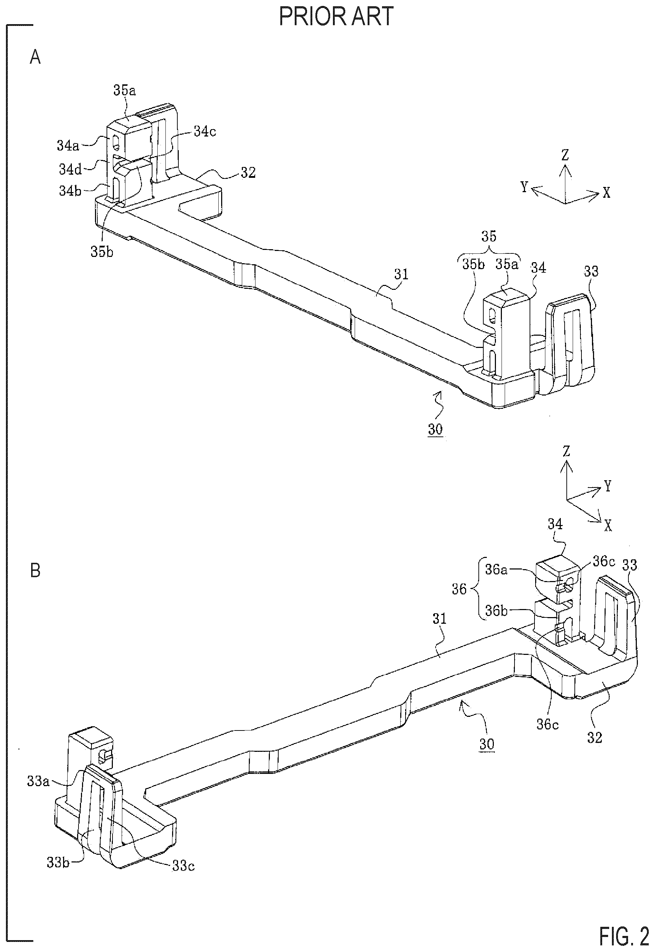

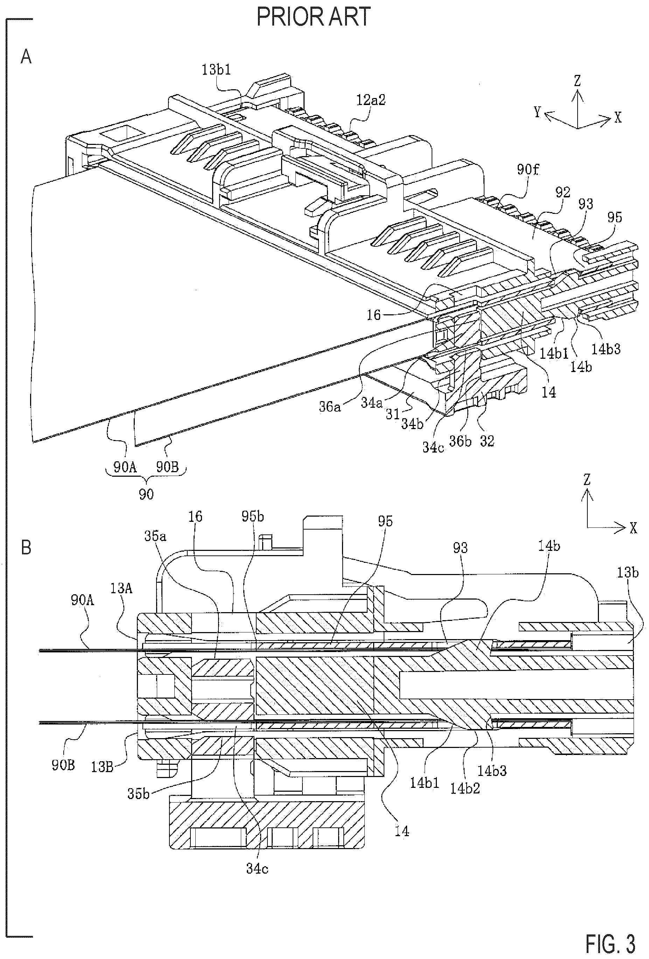

A conventional art related to a connector allows easy checking of a state where a flexible printed circuit (FPC) is completely inserted into a housing (for example, see Patent Literature 1 (Japanese Patent Application Laid Open No. 2024-90088)). FIG. 1 is a perspective view of an FPC connector (first connector 10) according to the conventional art. FIG. 2 is a perspective view of an independent secondary lock (ISL) according to the conventional art. A in FIG. 2 is a view as seen obliquely from the back, and B in FIG. 2 is a view as seen obliquely from the front. FIG. 3 is a cross-sectional view of main parts showing a state where an FPC is inserted into the first connector in a state where the independent secondary lock (ISL) according to the conventional art is temporarily held. A in FIG. 3 is a perspective view including a predetermined cross-sectional view, and B in FIG. 3 is the cross-sectional view.

The first connector 10 according to the conventional art includes a first housing 11 where an FPC 90 can be inserted, and an ISL 30 that can be attached to the first housing 11. The ISL 30 includes FPC holding columns 34 that prevent removal of the FPC 90, and lock springs 33 for locking that are to be held by the first housing 11. The FPC 90 includes cutouts 95a (not shown) that are formed on both ends in a width direction, and the cutouts 95a allow insertion of the FPC holding columns 34. The lock spring 33 for locking includes an engaging beam part 33a that is capable of holding the ISL 30 at a temporary holding position and at a secure holding position by being engaged with the first housing 11. The FPC holding column 34 includes an upper surface 35 that allows insertion of the FPC 90 when the ISL 30 is at the temporary holding position, and an engaging part 36 that engages with the cutout 95a in the FPC 90 when the ISL 30 is at the secure holding position (see Patent Literature 1, paragraph [0105]).

### SUMMARY OF THE INVENTION

When an ear part 95 of the FPC 90 passes above the upper surface 35 of the FPC holding column 34, and further moves relatively forward inside an end part insertion recessed part 13b, a front end 90f of the ear part 95 contacts a locking protruding part 14b. Then, when a locking opening 93 passes past the locking protruding part 14b, the locking protruding part 14b enters the locking opening 93 and locks the locking opening 93 (see Patent Literature 1, paragraph [0063]).

However, because there is a gap that is large enough to allow the locking opening 93 to pass above the locking protruding part 14b, when the end part insertion recessed part 13b is caused to face vertically downward (-Z direction side), for example, the locking opening 93 may cease to be locked by the locking protruding part 14b or locking may not be performed appropriately. That is, the temporary holding position indicated in relation to the first connector 10 of Patent Literature 1 described above may allow the locking protruding part 14b to lock the locking opening 93 when the first connector 10 is disposed at a specific orientation, but at orientations other than the specific orientation, there may arise a case where the locking protruding part 14b does not lock the locking opening 93, and there is a problem that major limitations are imposed on a mounting orientation.

Furthermore, the ISL 30 described above includes a main body part 31, and protruding piece parts 32 extending from both ends of the main body part 31. The lock spring 33 for locking as a holding part is formed at the protruding piece part 32 in a manner extending upward (see Patent Literature 1, paragraph [0052]). Accordingly, in the case where the ISL 30 is at the secure holding position, the first connector 10 can lock the FPC 90, but the ISL 30 is formed to cover the first connector 10 from outside, and an outer shape of the first connector 10 including the ISL 30 is large. This is a disadvantage for predetermined connectors that need to be thin and small.

In view of the problems described above, the present disclosure is aimed at providing a cable harness where no major limitations are imposed on a mounting orientation and locking of a flexible wiring board and a connector may be achieved without increasing the size of the connector.

To solve the problems described above, a cable harness according to a present embodiment comprises a flexible wiring board and a housing. The flexible wiring board includes a first end part having a first width, a second end part that is at a position on an opposite side from the first end part, a first side part that is one side part extending between the first end part and the second end part, the first side part including a first protruding part that protrudes outward in a first width direction, and a second side part that is an other side part extending between the first end part and the second end part, the second side part including a second protruding part that protrudes outward in the first width direction. The housing includes a first side part accommodating part capable of accommodating the first side part including the first protruding part, the first side part accommodating part including a first engaging part that protrudes inward in the first width direction and that is fixed to the housing so as not to be displaced relative to the housing, a second side part accommodating part capable of accommodating the second side part including the second protruding part, the second side part accommodating part including a second engaging part that protrudes inward in the first width direction, a first end part accommodating part that joins one end portion of the first side part accommodating part and one end portion of the second side part accommodating part so as to enable accommodation of the first end part, and an accommodating cover part that at least joins a first portion, of the first side part accommodating part, which is at a position in a direction farther from the first end part accommodating part than the first engaging part, and a second portion, of the second side part accommodating part, which is at a position in a direction farther from the first end part accommodating part than the second engaging part, the accommodating cover part forming an opening that allows insertion of the first end part. The second engaging part is formed by being joined to the accommodating cover part in such a way that, in a case where the flexible wiring board is inserted until the first side part side of the first end part comes into contact with the first end part accommodating part by causing the first protruding part to come into contact with the first engaging part before the second protruding part comes into contact with the second engaging part, and then the flexible wiring board is inserted such that the second side part side of the first end part comes into contact with the first end part accommodating part, the second engaging part is shifted, due to the second protruding part coming into contact, from a first position at which movement of the second protruding part toward the first end part accommodating part is restricted, to a second position at which movement of the second protruding part toward the first end part accommodating part is allowed.

### EFFECTS OF THE INVENTION

With the cable harness of the present embodiment, no major limitations are imposed on a mounting orientation and locking of a flexible wiring board and a connector may be achieved without increasing the size of the connector.

### BRIEF DESCRIPTION OF THE DRAWINGS

FIG. 1 is a perspective view of an FPC connector (first connector 10) according to a conventional art;
FIG. 2 is a perspective view of an independent secondary lock (ISL) according to the conventional art, where A in FIG. 2 is a view as seen obliquely from the back, and B in FIG. 2 is a view as seen obliquely from the front;
FIG. 3 is a cross-sectional view of main parts showing a state where an FPC is inserted into the first connector in a state where the independent secondary lock (ISL) according to the conventional art is temporarily held, where A in FIG. 3 is a perspective view including a predetermined cross-sectional view, and B in FIG. 3 is the cross-sectional view;
FIG. 4 is a perspective view showing an example of a state where a cable harness according to a present embodiment and a mating connector that is a mating counterpart of the cable harness are mated, where A in FIG. 4 is a perspective view as seen from above an edge frame part 52d, and B in FIG. 4 is a perspective view as seen from above an edge frame part 52c;
FIG. 5 is a perspective view of a cable harness 100 shown in FIG. 4, where A in FIG. 5 is a perspective view as seen from above the edge frame part 52d, and B in FIG. 5 is a perspective view as seen from above the edge frame part 52c;
FIG. 6 is a diagram showing the cable harness 100, where A in FIG. 6 is a front view, B in FIG. 6 is a top view, and C in FIG. 6 is a bottom view;
FIG. 7 is a perspective view showing the cable harness 100 from above in an exploded manner, the perspective view showing a state before the cable harness 100 and a mating connector 7 are mated;
FIG. 8 is a diagram showing a flexible wiring board 4, where A in FIG. 8 is a front view, B in FIG. 8 is a bottom view, and C in FIG. 8 is a right-side view;
FIG. 9 is an enlarged view of FIG. 8, where A in FIG. 9 is an enlarged view of a region Z in FIG. 8, and B in FIG. 9 is an enlarged view of a region Y in FIG. 8;
FIG. 10 is a diagram showing a housing 5, where A in FIG. 10 is a perspective view as seen from above the edge frame part 52d, B in FIG. 10 is a top view, and C in FIG. 10 is a bottom view;
FIG. 11 is a diagram for describing an arm part 53, where A in FIG. 11 is a perspective view as seen from below the arm part 53, and B in FIG. 11 is a left-side view of the housing 5;
FIG. 12 is a diagram for describing the arm part 53, where A in FIG. 12 is a top view of the arm part 53, and B in FIG. 12 is a bottom view of the arm part 53;
FIG. 13 is a diagram for describing an arm part 54, where A in FIG. 13 is a perspective view as seen from below the arm part 54, and B in FIG. 13 is a right-side view of the housing 5;
FIG. 14 is a diagram for describing the arm part 54, where A in FIG. 14 is a top view of the arm part 54, and B in FIG. 14 is a bottom view of the arm part 54;
FIG. 15 is a diagram showing a retainer 6, where A in FIG. 15 is a perspective view as seen from above and from an outer side, and B in FIG. 15 is a perspective view as seen from above and from an inner side;
FIG. 16 is a diagram for describing a method of attaching the retainer 6, where A in FIG. 16 is a perspective view, as seen from below, of the housing 5 before attachment of the retainer 6, and B in FIG. 16 is a diagram as viewed from a same perspective as A in FIG. 16, and shows a state where the retainer 6 is attached and movement of a first locking arm part 542 is allowed;
FIG. 17 is a bottom view of a state where the retainer 6 is attached to the housing 5, where A in FIG. 17 is a diagram of a state where movement of the first locking arm part 542 is allowed, and B in FIG. 17 is a diagram of a state where movement of the first locking arm part 542 is restricted;
FIG. 18 is a right-side view of the cable harness 100 where movement of the first locking arm part 542 is allowed;
FIG. 19 is an enlarged view of a cross-sectional view taken along A-A in FIG. 18, where a part of the cross-sectional view is omitted;
FIG. 20 is a diagram showing attachment of the flexible wiring board 4 to the housing 5 in FIG. 19 by a manner corresponding to the cross-sectional view taken along A-A in FIG. 18;
FIG. 21 is an enlarged view of a region X in FIG. 20, where A in FIG. 21 is a diagram showing the flexible wiring board 4 that is being inserted, and B in FIG. 21 is a diagram showing a state where insertion of the flexible wiring board 4 is completed; and
FIG. 22 is a diagram for describing operation of the retainer 6, where A in FIG. 22 is a diagram showing a state where movement of the first locking arm part 542 is allowed, and B in FIG. 22 is a diagram showing a state where movement of the first locking arm part 542 is restricted.

### DETAILED DESCRIPTION OF THE EMBODIMENTS

Hereinafter, an embodiment of the present disclosure will be described with reference to the drawings. Additionally, in the following description, structural parts having the same function are denoted by the same identification number, and a redundant description will be omitted.

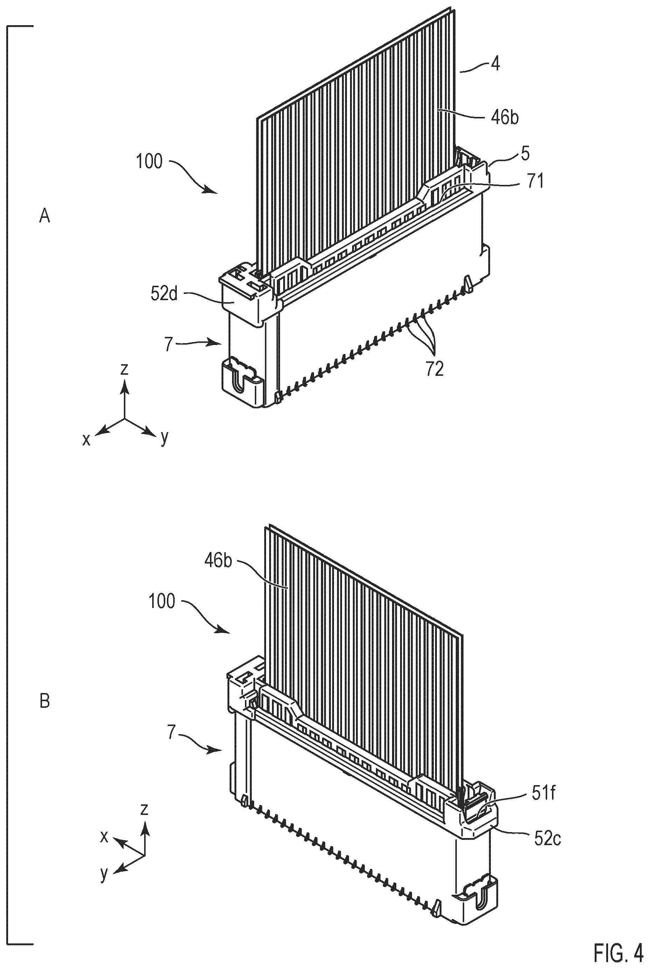

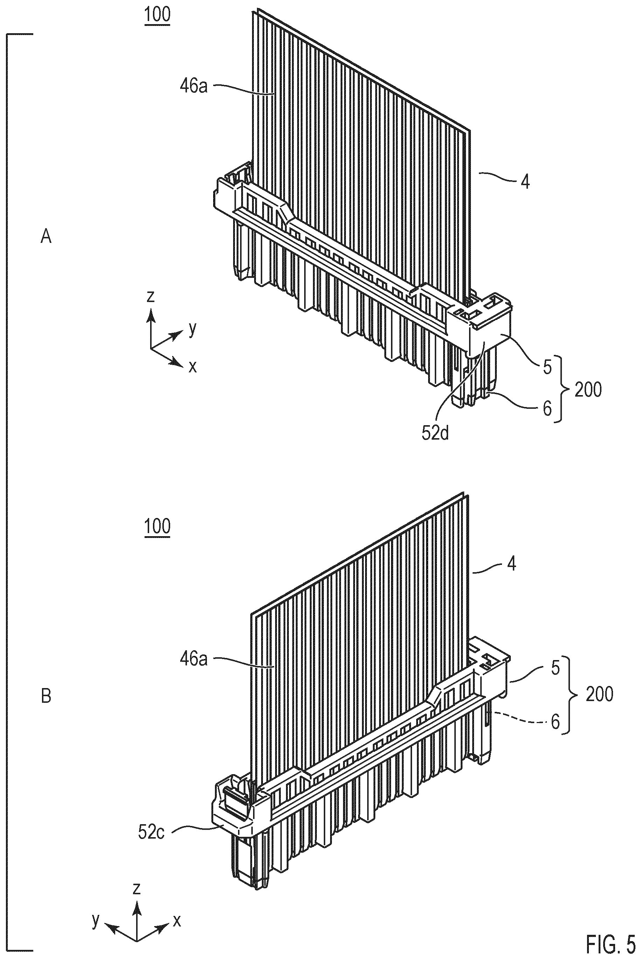

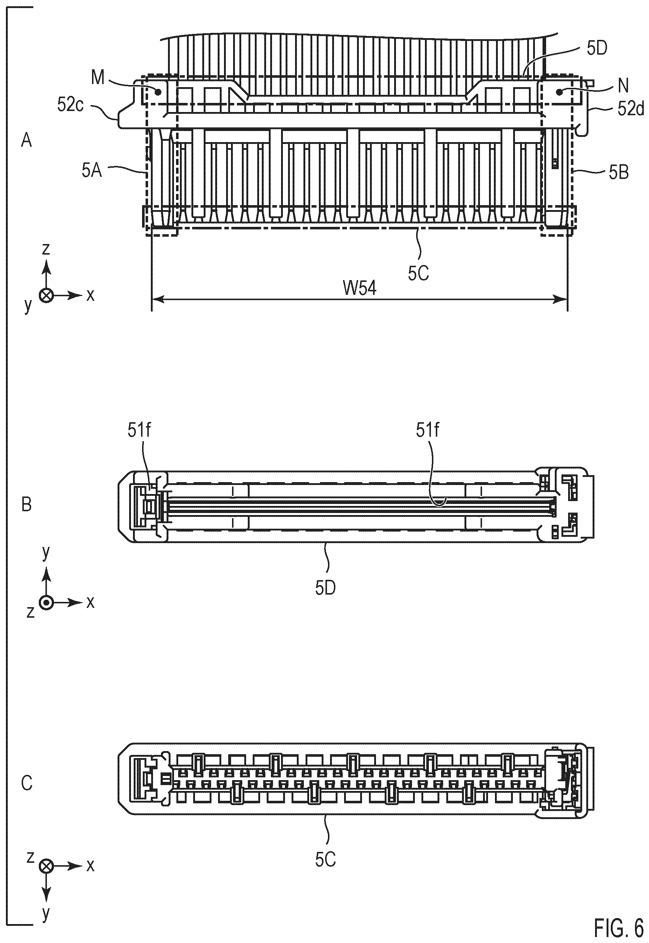

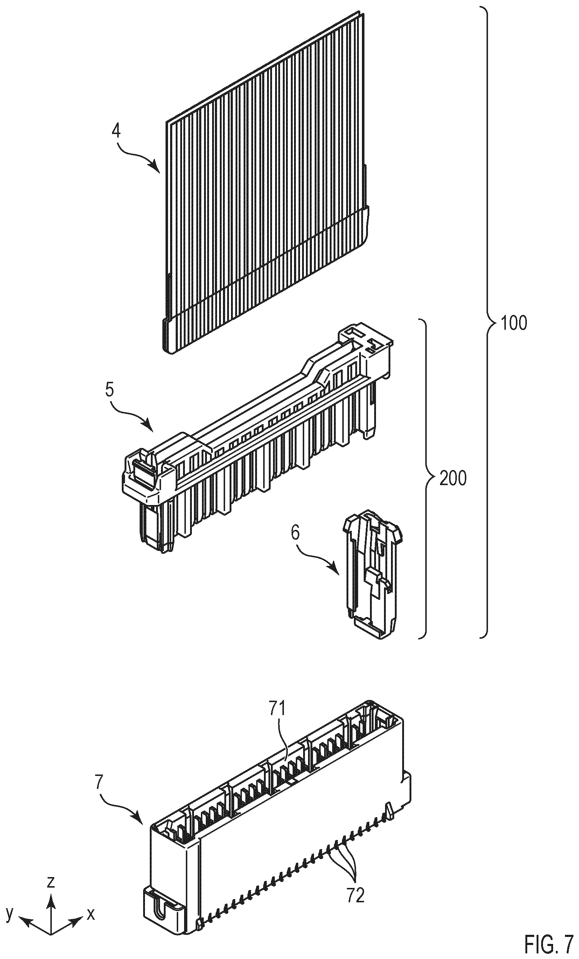

FIG. 4 is a perspective view showing an example of a state where a cable harness according to the present embodiment and a mating connector that is a mating counterpart of the cable harness are mated. A in FIG. 4 is a perspective view as seen from above an edge frame part 52d, and B in FIG. 4 is a perspective view as seen from above an edge frame part 52c. FIG. 5 is a perspective view of a cable harness 100 shown in FIG. 4. A in FIG. 5 is a perspective view as seen from above the edge frame part 52d, and B in FIG. 5 is a perspective view as seen from above the edge frame part 52c. FIG. 6 is a diagram showing the cable harness 100. A in FIG. 6 is a front view, B in FIG. 6 is a top view, and C in FIG. 6 is a bottom view. FIG. 7 is a perspective view showing the cable harness 100 from above in an exploded manner, the perspective view showing a state before the cable harness 100 and a mating connector 7 are mated.

As shown in FIGS. 4 to 7, the cable harness 100 according to the present embodiment includes a flexible wiring board 4, a housing 5, and a retainer 6.

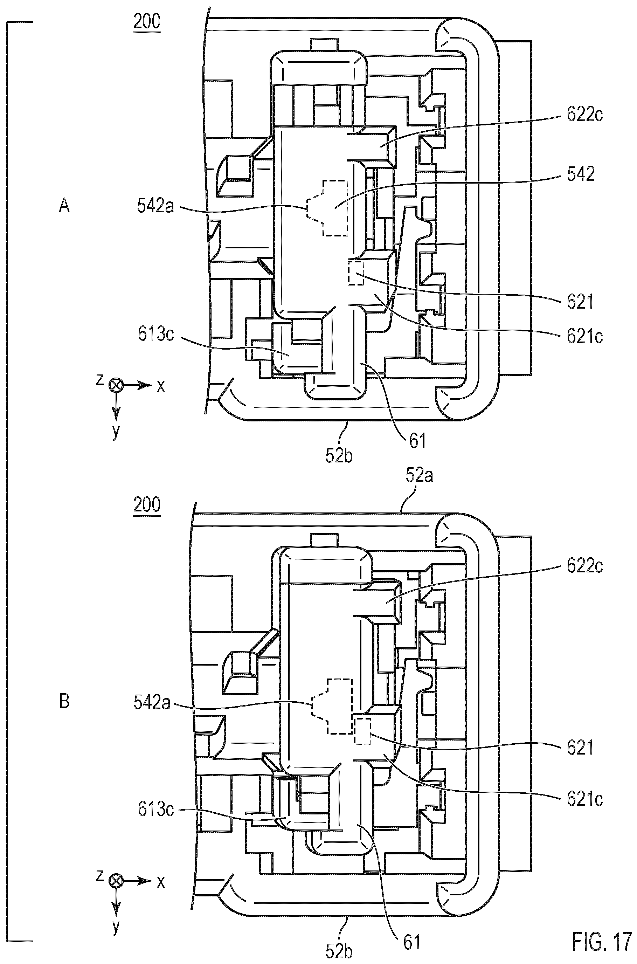

The retainer 6 is attached to the housing 5. In the present embodiment, the housing 5 and the retainer 6 are collectively referred to as a housing set 200. The flexible wiring board 4 is attached to the housing set 200. When the flexible wiring board 4 is attached to the housing set 200, and then, the retainer 6 is moved (slid) from a third position P3 to a fourth position P4 as described later (see FIG. 17), movement of a first locking arm part 542 toward an outer side in a width direction of the housing 5 is restricted. A locked state where engagement between a second protruding part 441 and a second engaging part 542a cannot be released is thereby reached. That is, a state where the flexible wiring board 4 cannot be removed from the housing set 200 is reached, and assembly of the cable harness 100 is completed (FIG. 5).

As shown in FIG. 4, the assembled cable harness 100 is inserted into an opening 71 of the mating connector 7 mounted on a printed wiring board, not shown, via terminals 72. After insertion, a secondary locking mechanism 8 (not shown) described later is inserted into a secondary locking hole 51f (FIGS. 4, 6) in the housing 5, and mating between the cable harness 100 and the mating connector 7 is locked. A plurality of terminals 72 corresponding to terminals (electrodes 48a, 48b) of the flexible wiring board 4 are pressed into the mating connector 7, and when the cable harness 100 is inserted into the mating connector 7, electrical connection is secured between the terminals (electrodes 48a, 48b) of the flexible wiring board 4 and the plurality of terminals 72 of the mating connector 7 corresponding thereto.

Components constituting the cable harness 100 as an embodiment of the present disclosure will be described below.

### (Flexible Wiring Board 4)

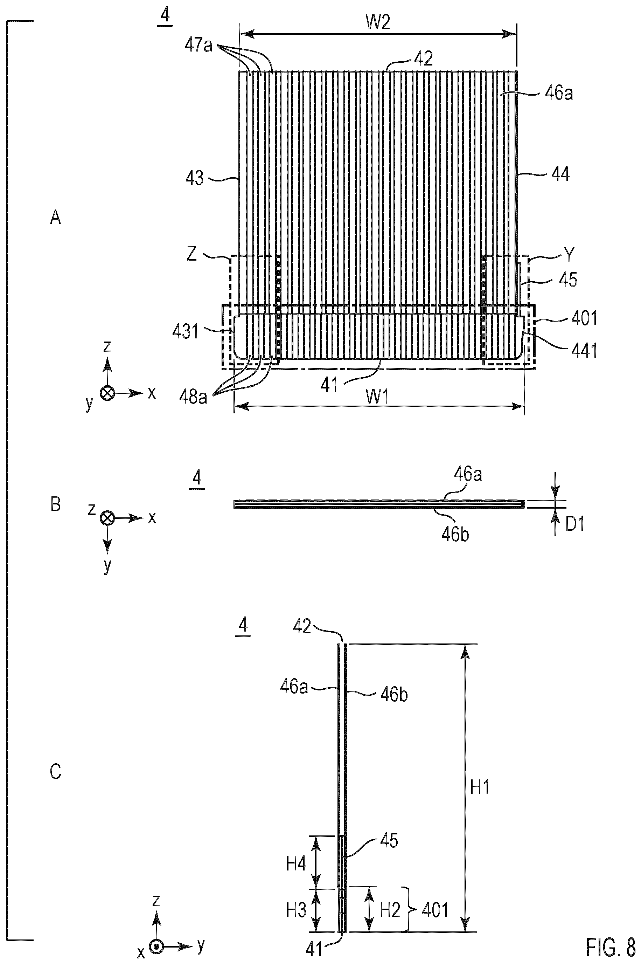

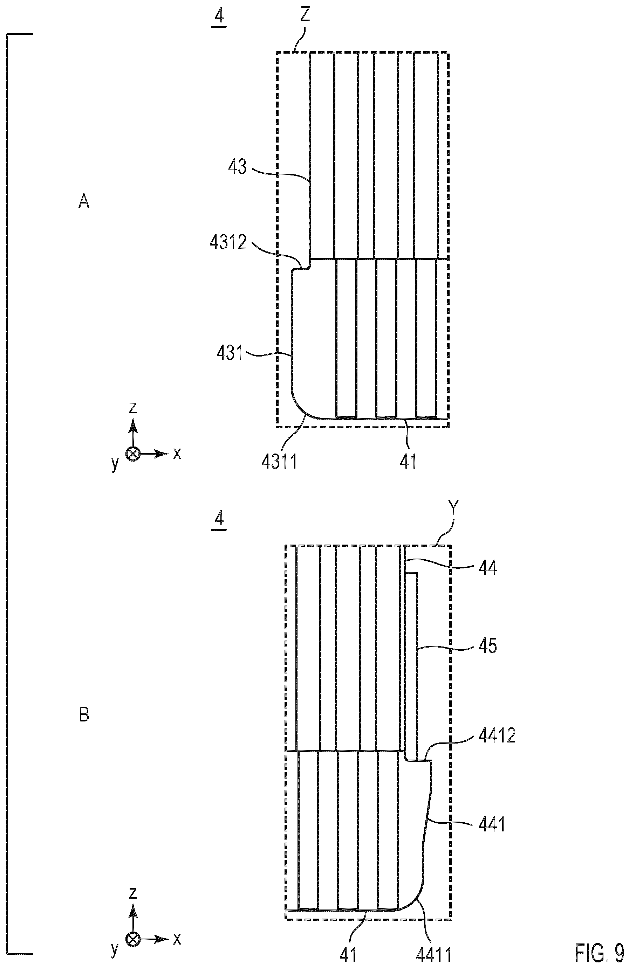

FIG. 8 is a diagram showing the flexible wiring board 4. A in FIG. 8 is a front view, B in FIG. 8 is a bottom view, and C in FIG. 8 is a right-side view. FIG. 9 is an enlarged view of FIG. 8. A in FIG. 9 is an enlarged view of a region Z in FIG. 8, and B in FIG. 9 is an enlarged view of a region Y in FIG. 8. The flexible wiring board 4 of the present embodiment is a wiring board having a thin plate shape, where polyimide is used as a base material, for example. The flexible wiring board 4 includes, in a length direction (H1 direction), a first end part 41 having a first width W1, and a second end part 42 having a second width W2 and positioned on an opposite side from the first end part 41. The flexible wiring board 4 includes a first side part 43 that is one side part extending between the first end part 41 and the second end part 42, the first side part 43 including a first protruding part 431 that protrudes outward in a first width W1 direction. The flexible wiring board 4 includes a second side part 44 that is the other side part extending between the first end part 41 and the second end part 42, the second side part 44 including a second protruding part 441 that protrudes outward in the first width W1 direction. For example, the flexible wiring board 4 is flexible enough or more than enough to allow the first end part 41 and the second end part 42 to be aligned next to each other. In the present example, the flexible wiring board 4 includes two layers, namely, a first layer 46a and a second layer 46b. In a region 401 on the first end part 41 side, surfaces of the first layer 46a and the second layer 46b that face each other are bonded by a predetermined adhesive, and the first layer 46a and the second layer 46b are integrally formed. However, the flexible wiring board 4 is not limited to such a structure. For example, two layers may simply be stacked without being integrated. Furthermore, the flexible wiring board 4 may instead include one layer, for example.

The first layer 46a includes a plurality of wires 47a that are aligned in a width direction (second width W2 direction in FIG. 8) of the flexible wiring board 4, and a long, thin electrode 48a for being electrically connected to the mating connector 7 is provided on the region 401 side of each wire 47a. An insulating layer covers the wire 47a from outside for insulation. However, outside the region 401, the electrode 48a is exposed. The second layer 46b includes a plurality of wires 47b (not shown) that are aligned in the second width W2 direction of the flexible wiring board 4, and a long, thin electrode 48b (not shown) for being electrically connected to the mating connector 7 is provided on the region 401 side of each wire 47b. An insulating layer covers the wire 47b from outside for insulation. However, outside the region 401, the electrode 48b is exposed. The plurality of electrodes 48a and electrodes 48b are shifted in the width direction (second width W2 direction) of the flexible wiring board 4 from facing positions. According to such an arrangement, the electrodes 48a and the electrodes 48b that are a plurality of terminals are arranged across surfaces of the first layer 46a and the second layer 46b in a staggered manner when seen from the first end part 41 side as shown in B in FIG. 8. Additionally, such a staggered arrangement is not an essential arrangement, and other arrangements may also be adopted. For example, in the case where the flexible wiring board 4 includes one layer, a staggered arrangement does not have to be adopted.

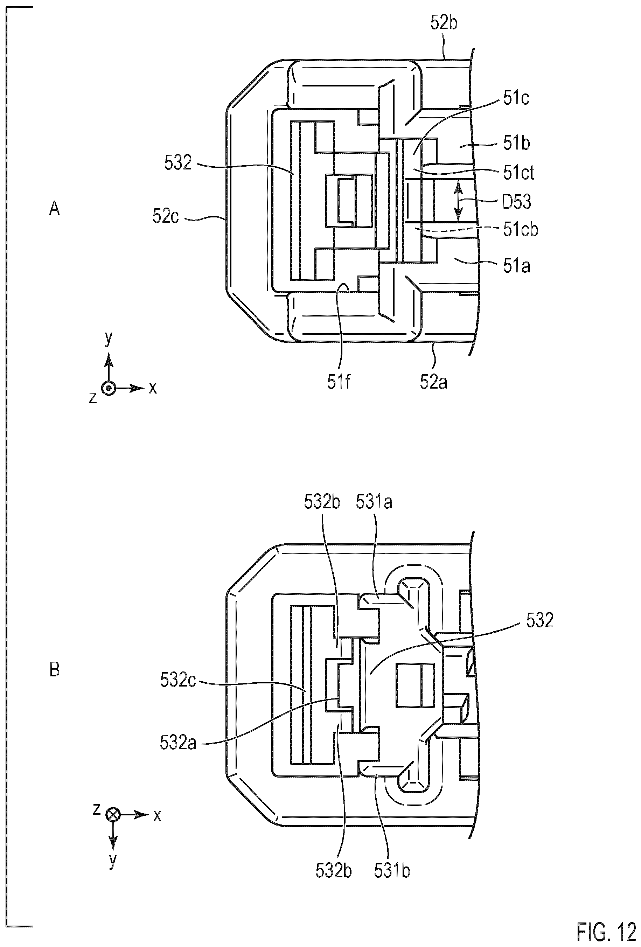

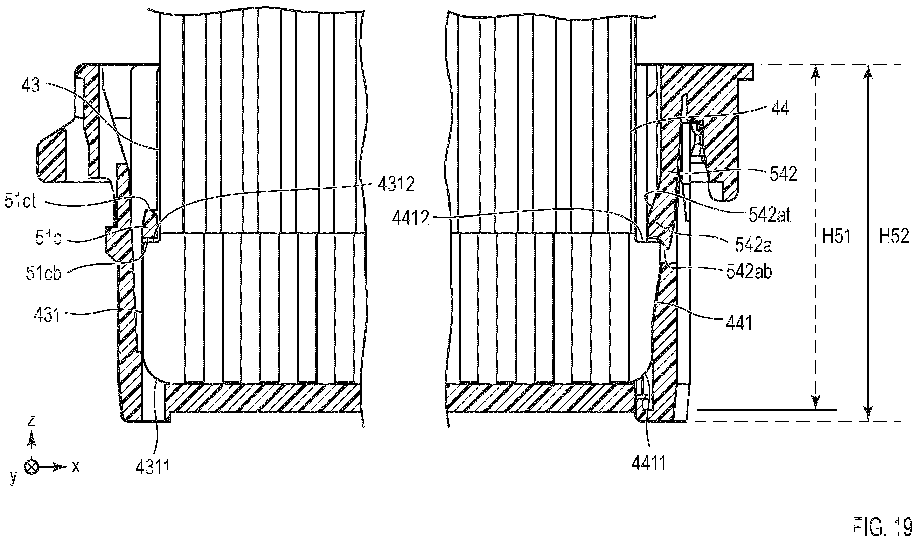

As shown in FIG. 8, the flexible wiring board 4 includes the first protruding part 431 and the second protruding part 441 that protrude outward in the width direction (first width W1 direction) of the first end part 41. The first protruding part 431 is provided on the first end part 41 side of the first side part 43. The second protruding part 441 is provided on the first end part 41 side of the second side part 44. The second protruding part 441 is provided with an erroneous insertion preventing part 45 (FIG. 9) that has a long, thin bar-shape and that extends upward along the second side part 44. The erroneous insertion preventing part 45 is structured to have a predetermined length such that, even when the flexible wiring board 4 is inserted into the housing 5 in such a way that a surface 4411 of the second protruding part 441 comes into contact with a first engaging part 51c (see FIGS. 12, 19), a distal end part of the erroneous insertion preventing part 45 is not engaged with the first engaging part 51c. The erroneous insertion preventing part 45 can thus prevent erroneous insertion whereby the flexible wiring board 4 is inserted with front and back reversed at the time of being inserted into the housing 5, for example.

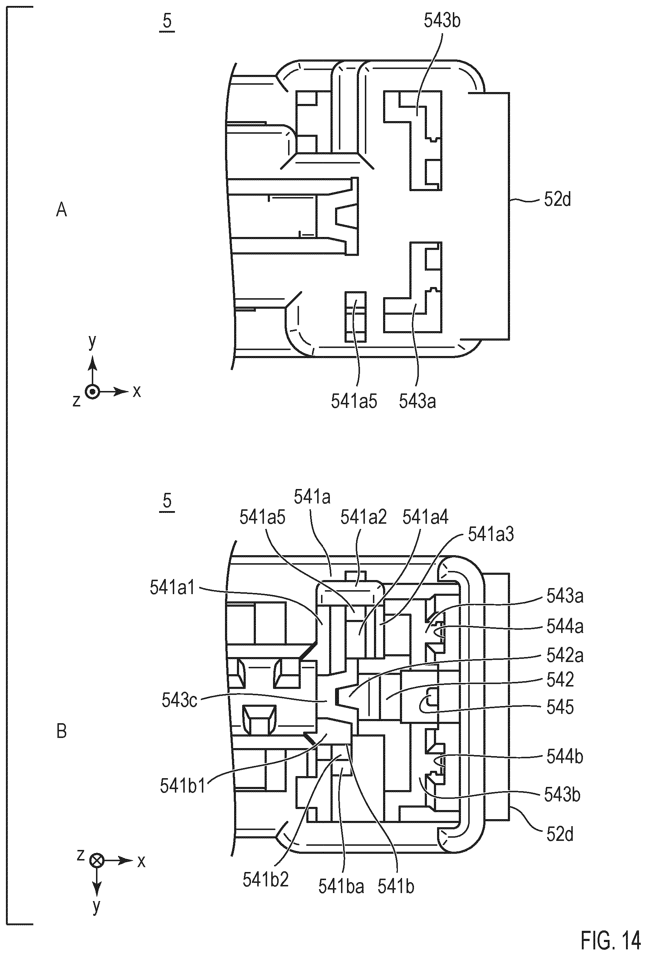

As shown in FIG. 9, the first protruding part 431 includes a surface 4311 that is to contact an upper surface 51ct of the first engaging part 51c provided on an arm part 53 of the housing 5, and a surface 4312 that is to contact a lower surface 51cb (see FIGS. 12, 19). The second protruding part 441 includes a surface 4411 that is to contact an upper surface 542at of the second engaging part 542a of the first locking arm part 542 provided on an arm part 54 of the housing 5, and a surface 4412 that is to contact a lower surface 542ab (see FIGS. 14, 19). In the present example, the surfaces 4311, 4411 are formed into an R-shape, but such an example is not restrictive. The surfaces 4311, 4411 may be tapered or may have any other shape as long as behaviors as described below can be achieved.

### (Housing 5)

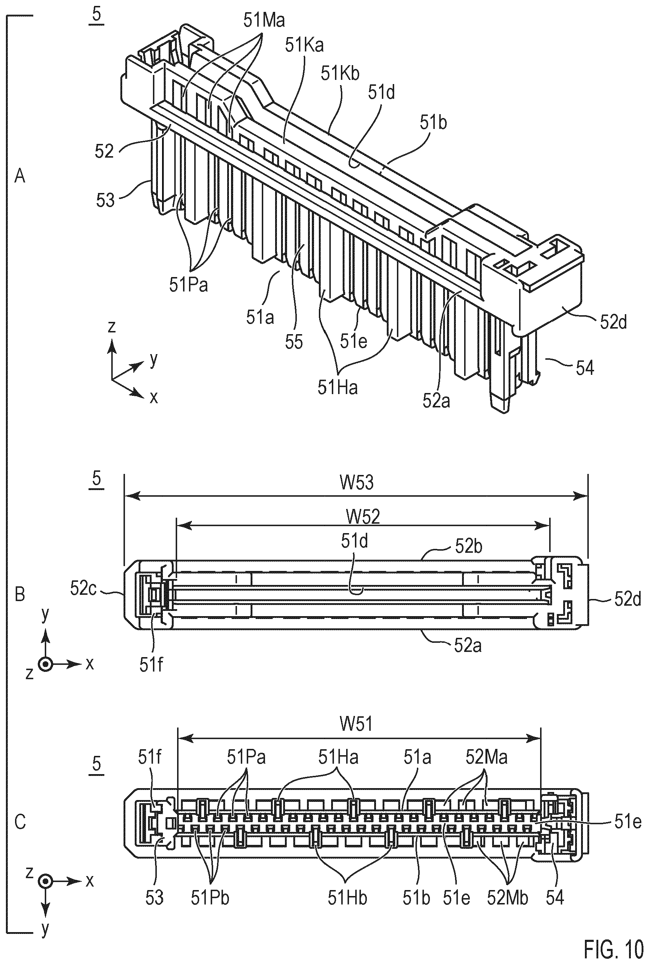

FIG. 10 is a diagram showing the housing 5. A in FIG. 10 is a perspective view as seen from above the edge frame part 52d, B in FIG. 10 is a top view, and C in FIG. 10 is a bottom view.

As shown in FIG. 10, the housing 5 is a hollow, substantially box-shaped case for accommodating the flexible wiring board 4. For example, the housing 5 is a molded component that uses thermoplastic resin such as ABS as a base material. Main elements of the housing 5 are an accommodating part 55 for accommodating the first end part 41 side (the region 401 side) of the flexible wiring board 4, a frame-shaped part 52 that is provided to surround an upper side (+z direction side) of the accommodating part 55, and the arm parts 53, 54 that are provided to cover both side surfaces (both ends in the width direction) of the accommodating part 55.

### [Accommodating Part 55]

The accommodating part 55 has a substantially box shape obtained by elongating a substantially recessed cross-section in the width direction, and has, on inside, a hollow shape that allows insertion of the region 401 of the flexible wiring board 4. The accommodating part 55 includes covers 51a, 51b, and an abutting part 51e. The covers 51a, 51b are formed as substantially rectangular thin plates that are upright and that face each other in a manner mainly covering the region 401 of surfaces of the flexible wiring board 4 along the width direction (first width W1 direction). Cutout parts 51Ka, 51Kb are provided at center portions of upper end sides (+z direction sides) of the covers 51a, 51b. The abutting part 51e is formed to join the cover 51a and the cover 51b on bottom surface sides (-z direction sides) of the covers 51a, 51b in such a way as to cover the first end part 41 of the flexible wiring board 4. According to such a structure, an opening 51d is formed in the accommodating part 55, at upper distal ends of the covers 51a, 51b, to receive insertion of the flexible wiring board 4. The opening 51d receives insertion from the first end part 41 side of the flexible wiring board 4 including the first protruding part 431 and the second protruding part 441. The abutting part 51e restricts further insertion of the flexible wiring board 4 when the flexible wiring board 4 is inserted from the opening 51d of the housing 5, such that the flexible wiring board 4 does not penetrate through the housing 5.

The cover 51a includes the same number of long, thin electrode holes 51Pa as the electrodes 48a of the flexible wiring board 4 in positions matching those of the electrodes 48a when the flexible wiring board 4 is attached to the housing 5, the electrode holes 51Pa having substantially the same shape as the electrodes 48a, the electrode holes 51Pa being for exposing the electrodes 48a. In the same manner, the cover 51b includes electrode holes 51Pb for exposing the electrodes 48b of the flexible wiring board 4. Because the electrodes 48a and the electrodes 48b are arranged shifted from each other in the width direction (first width W1 direction), the electrode holes 51Pa and the electrode holes 51Pb are shifted from each other in a width direction (W51 or W52 direction) of the housing 5. According to such an arrangement, the electrode holes 51Pa and the electrode holes 51Pb are arranged in a staggered manner across the cover 51a and the cover 51b, when seen from the abutting part 51e side, as shown in C in FIG. 10.

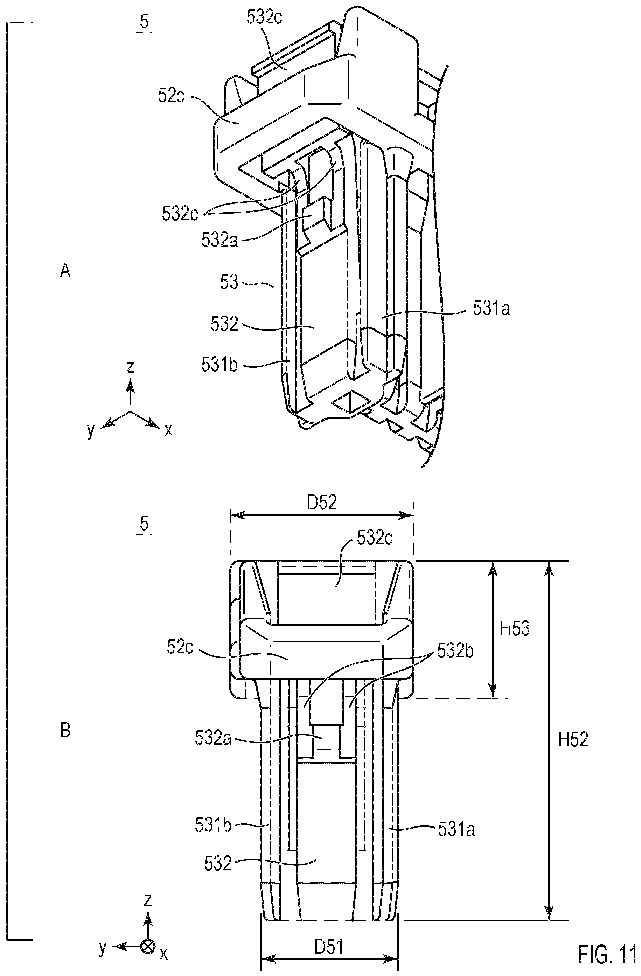

In the present example, a width length W52 of the covers 51a, 51b, and a width length W51 of the abutting part 51e are slightly smaller than the first width W1 of the flexible wiring board 4 including the first protruding part 431 and the second protruding part 441. D53 (see FIG. 12) that is a thickness of the opening 51d is slightly greater than D1 (see FIG. 8) that is a thickness of the flexible wiring board 4. A height H52 (FIG. 11) of the covers 51a, 51b is higher (greater) than a height H2 (see FIG. 8) of the region 401 so that the region 401 of the flexible wiring board 4 can be securely accommodated inside the housing 5.

Reinforcing parts 51Ha, 51Hb are provided on the covers 51a, 51b of the present example. The reinforcing parts 51Ha, 51Hb reinforce the covers 51a, 51b by being joined to the covers 51a, 51b while extending from lower surface sides (-z direction sides) of side frame parts 52a, 52b toward a lower side (-z direction side) that is the abutting part 51e side. The reinforcing parts 51Ha, 51Hb in the present example are box-shaped columns having a C-shaped cross section that cover a predetermined number of electrode holes 51Pa, 51Pb at predetermined intervals. In the present example, from a perspective in C in FIG. 10, the reinforcing parts 51Ha are provided at positions for covering 2nd, 7th, 12th, 17th, and 22nd electrode holes 51Pa in the cover 51a from left. The reinforcing parts 51Hb are provided at positions for covering 5th, 10th, 15th, and 20th electrode holes 51Pb in the cover 51b from left. The number of pieces of the reinforcing parts 51Ha, 51Hb may be adjusted as appropriate according to shape and size of the housing 5.

The first engaging part 51c is provided on the arm part 53 sides of the covers 51a, 51b of the accommodating part 55, the first engaging part 51c joining the covers 51a, 51b (see FIGS. 12, 19). The first engaging part 51c in the present example is fixed to the cover 51a and the cover 51b so as not to be displaced relative to the housing 5. That is, both ends (end portions in a y-axis direction) of the first engaging part 51c are fixed. The first engaging part 51c is formed protruding inward in the first width W1 direction. The first engaging part 51c in the present example has a columnar shape whose cross-section is substantially quadrangular, and the first engaging part 51c joins the cover 51a and the cover 51b, and includes the upper surface 51ct and the lower surface 51cb. The upper surface 51ct contacts the surface 4311 when the flexible wiring board 4 is inserted into the housing 5. The lower surface 51cb contacts the surface 4312 when the flexible wiring board 4 is inserted into the housing 5 in such a way that the first side part 43 side of the first end part 41 contacts an inner surface of the abutting part 51e.

### [Frame-Shaped Part 52]

The frame-shaped part 52 includes the side frame parts 52a, 52b, and the edge frame parts 52c, 52d.

The side frame parts 52a, 52b each have a long, thin bar shape that defines a width W53 of the housing 5, and the side frame parts 52a, 52b are joined to the covers 51a, 51b while facing each other to mainly cover the opening 51d sides of the covers 51a, 51b on surfaces of the accommodating part 55 in the width direction W51. The side frame parts 52a, 52b in the present example are increased in height to H53 (see FIG. 11) at both end portions, and are joined to the edge frame parts 52c, 52d. In the present example, the side frame parts 52a, 52b at least join a first portion that is at a position in a direction farther from the abutting part 51e than the first engaging part 51c (for example, M in FIG. 6) and a second portion that is at a position in a direction farther from the abutting part 51e than the second engaging part 542a (for example, N in FIG. 6).

To reduce weight, a plurality of grooves 52Ma, 52Mb are formed on lower surface sides (-z direction side) of the side frame parts 52a, 52b. In the present example, the plurality of grooves 52Ma, 52Mb are formed between the reinforcing parts 51Ha, 51Hb, as shown in C in FIG. 10.

The edge frame parts 52c, 52d are thin plate-shaped and define a thickness D52 (see FIG. 11) of the housing 5, and are joined to the side frame parts 52a, 52b. Accordingly, the side frame parts 52a, 52b and the edge frame parts 52c, 52d have a laterally elongated rectangular frame shape and form the frame-shaped part 52. Lower surface sides (-z direction side) of the edge frame parts 52c, 52d contact an end portion of a housing of the mating connector 7, and the edge frame parts 52c, 52d thereby restrict movement of insertion of the cable harness 100 into the mating connector 7 so that insertion is not performed beyond the design expected. The cable harness 100 and the terminals 72 in the mating connector 7 may thus be prevented from being damaged, for example.

### [Arm Parts 53, 54]

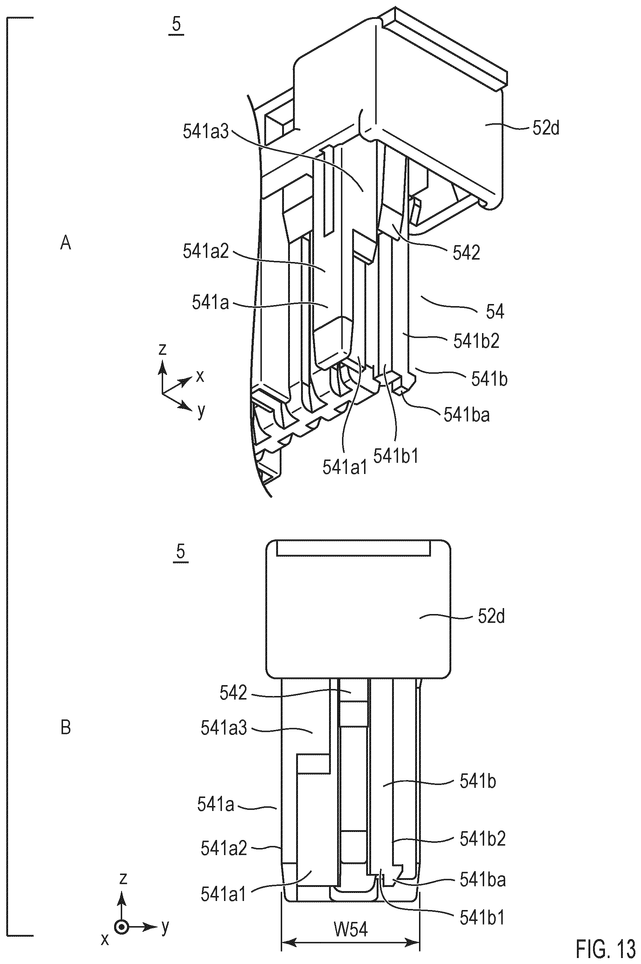

FIG. 11 is a diagram for describing the arm part 53. A in FIG. 11 is a perspective view as seen from below the arm part 53. B in FIG. 11 is a left-side view of the housing 5. FIG. 12 is a diagram for describing the arm part 53. A in FIG. 12 is a top view of the arm part 53. B in FIG. 12 is a bottom view of the arm part 53. FIG. 13 is a diagram for describing the arm part 54. A in FIG. 13 is a perspective view as seen from below the arm part 54. B in FIG. 13 is a right-side view of the housing 5. FIG. 14 is a diagram for describing the arm part 54. A in FIG. 14 is a top view of the arm part 54. B in FIG. 14 is a bottom view of the arm part 54.

The arm parts 53, 54 extend downward (-z direction side) from end portions of the covers 51a, 51b in the width direction to end portions of the abutting part 51e in the width direction. The arm parts 53, 54 are provided upright in a manner covering both side surfaces of the region 401 of the flexible wiring board 4. The arm part 53 extends from a side where the first protruding part 431 is inserted (left side in A in FIG. 6), among end portions of the opening 51d in the width direction, toward the side of the abutting part 51e into which the flexible wiring board 4 is inserted. The arm part 54 extends from a side where the second protruding part 441 is inserted (right side in A in FIG. 6), among the end portions of the opening 51d in the width direction, toward the side of the abutting part 51e into which the flexible wiring board 4 is inserted. In the present example, a length H52 of extension of the arm parts 53, 54 is slightly greater than a height H51 from the opening 51d to outside of the abutting part 51e, and is a length that allows both end sides of the abutting part 51e to be completely covered (see FIG. 19). Accordingly, in relation to the accommodating part 55, the arm part 53 is capable of accommodating the first side part 43 including the first protruding part 431. In relation to the accommodating part 55, the arm part 54 is capable of accommodating the second side part 44 including the second protruding part 441.

A length W54 (FIG. 6) between outside of the arm part 53 and outside of the arm part 54 is slightly smaller than an opening width of the opening 71 of the mating connector 7. A width D51 (FIG. 11) of the arm parts 53, 54 is slightly smaller than a length of the opening 71 of the mating connector 7 in a thickness direction (short direction, y-axis direction). As shown in FIGS. 11, 13, distal ends of the arm parts 53, 54 on an insertion side (extension side, -z direction side) are partially tapered so as to facilitate insertion into the mating connector 7. Positioning in the width direction and the thickness direction at the time of insertion of the cable harness 100 into the opening 71 of the mating connector 7 is thus facilitated, and insertion into the mating connector 7 is facilitated. Main arm parts 531a, 531b, a main arm part 541a, and a main arm part 61 described later guide insertion of the cable harness 100 into the mating connector 7.

As shown in FIGS. 11, 12, the arm part 53 is a vertical wall formed from a pair of main arm parts 531a, 531b, and a secondary locking arm part 532 extending in parallel with and between the main arm parts 531a, 531b. The main arm parts 531a, 531b and the secondary locking arm part 532 are joined on the abutting part 51e sides of the main arm parts 531a, 531b. That is, the main arm parts 531a, 531b extend from the opening 51d toward a lower side (-z direction side) that is the abutting part 51e side, and are joined to the secondary locking arm part 532 at the distal ends of extension. The secondary locking arm part 532 extends in an opposite direction with respect to the main arm parts 531a, 531b, or in other words, in a direction from the abutting part 51e side that is a joining side toward the opening 51d. The secondary locking arm part 532 includes a secondary locking part 532a at a distal end at a height about half the height H52. A pair of leg parts 532b that extend further upward are provided on left and right of the secondary locking part 532a. A pressing part 532c is provided on an extension side of the leg parts 532b. A secondary locking hole 51f for allowing insertion of the secondary locking mechanism 8 (not shown) is formed in the frame-shaped part 52, in an end portion on the edge frame part 52c side. The secondary locking mechanism 8 is a mechanical component separate from the cable harness 100 and the housing set 200, and is for locking mating of the mating connector 7 and the cable harness 100. When the secondary locking mechanism 8 is inserted toward the secondary locking hole 51f from above, a part of the secondary locking mechanism 8 overlaps the arm part 53 in an extension direction. The pressing part 532c is thereby prevented from being pressed in a direction of the edge frame part 52d, and mating of the cable harness 100 and the mating connector 7 is locked.

As shown in FIGS. 13, 14, the arm part 54 is a vertical wall formed from the main arm part 541a, a sub-arm part 541b, and the first locking arm part 542 extending in parallel with and between the main arm part 541a and the sub-arm part 541b. The main arm part 541a, the sub-arm part 541b, and the first locking arm part 542 are joined on the opening 51d side. In other words, the main arm part 541a, the sub-arm part 541b, and the first locking arm part 542 are integrally joined on the opening 51d side, and extend in a direction (downward side, -z direction side) away from the opening 51d. The first locking arm part 542 extends from the second protruding part 441 side among the end portions of the opening 51d in the width direction, in a direction of insertion (-z direction) of the flexible wiring board 4. The main arm part 541a and the sub-arm part 541b are provided extending from the opening 51d. The main arm part 541a and the sub-arm part 541b are provided next to the first locking arm part 542 in a manner sandwiching the first locking arm part 542, and are joined to the abutting part 51e. Additionally, as described above, the main arm parts 531a, 531b and the secondary locking arm part 532 are joined on the abutting part 51e sides of the main arm parts 531a, 531b. That is, each of one end portion of the arm part 53 and one end portion of the arm part 54 is joined on the abutting part 51e side. Accordingly, the abutting part 51e is able to accommodate the first end part 41 in relation to the arm parts 53, 54 or the covers 51a, 51b.

As shown in FIG. 14, an end portion of the first locking arm part 542 on an extension side is provided with the second engaging part 542a that protrudes toward inside of the accommodating part 55 (inner side in the first width W1 direction), and is a free end. When a position of the second engaging part 542a before insertion of the flexible wiring board 4 is given as a first position P1, the second engaging part 542a is shifted, when the flexible wiring board 4 is inserted into the housing 5, to a second position P2 on an outer side in the width direction of the housing 5 due to the second protruding part 441 coming into contact with the second engaging part 542a.

In other words, in a case as described below, the second engaging part 542a is formed while being joined to the housing 5 in such a way that, when the second protruding part 441 comes into contact, the second engaging part 542a is shifted from the first position P1 at which movement of the second protruding part 441 toward the abutting part 51e is restricted, to the second position P2 at which movement of the second protruding part 441 toward the abutting part 51e is allowed. That is, (1) the flexible wiring board 4 is inserted until the first side part 43 side of the first end part 41 comes into contact with the abutting part 51e, by causing the first protruding part 431 to come into contact with the first engaging part 51c before the second protruding part 441 comes into contact with the second engaging part 542a. (2) Next, the flexible wiring board 4 is inserted such that the second side part 44 side of the first end part 41 comes into contact with the abutting part 51e. The second engaging part 542a is joined to the housing 5 such that the second engaging part 542a is shifted from the first position P1 to the second position P2 in the case described above.

The second engaging part 542a is joined to the housing 5 in such a way as to return to the first position P1 when the flexible wiring board 4 is further inserted and the second side part 44 side of the first end part 41 comes into contact with the abutting part 51e. For example, the first locking arm part 542 in the present example is joined to the housing 5 while having a cantilever shape, with the second engaging part 542a being a free end. The cantilever shape in the present example extends in a direction from the opening 51d toward the abutting part 51e. However, the first locking arm part 542 of the present disclosure may be joined to the housing 5 by extending in other directions as long as the housing 5 and the retainer 6 can be structured such that the second engaging part 542a described later is able to move from the first position P1 to the second position P2.

Heretofore, a structure of the housing 5 has been described as one embodiment of the present disclosure. The housing of the present disclosure can be said, in other words, to at least include a first side part accommodating part 5A, a second side part accommodating part 5B, a first end part accommodating part 5C, and an accommodating cover part 5D as described below, for example.

That is, as indicated by a part surrounded by the region of the first side part accommodating part 5A as shown in FIG. 6, for example, the first side part accommodating part 5A is capable of accommodating the first side part 43 including the first protruding part 431, and includes the first engaging part 51c that protrudes inward in the first width W1 direction and that is fixed to the housing 5 so as not to be displaced relative to the housing 5.

As indicated by a part surrounded by the region of the second side part accommodating part 5B as shown in FIG. 6, for example, the second side part accommodating part 5B is capable of accommodating the second side part 44 including the second protruding part 441, and includes the second engaging part 542a that protrudes inward in the first width W1 direction.

As indicated by a part surrounded by the region of the first end part accommodating part 5C as shown in FIG. 6, for example, the first end part accommodating part 5C joins one end portion of the first side part accommodating part 5A and one end portion of the second side part accommodating part 5B such that the first end part 41 can be accommodated.

As indicated by a part surrounded by the region of the accommodating cover part 5D as shown in FIG. 6, for example, the accommodating cover part 5D at least joins a first portion (for example, M in FIG. 6), of the first side part accommodating part 5A, which is at a position in a direction farther from the first end part accommodating part 5C than the first engaging part 51c, and a second portion (for example, N in FIG. 6), of the second side part accommodating part 5B, which is at a position in a direction farther from the first end part accommodating part 5C than the second engaging part 542a. The accommodating cover part 5D forms the opening 51d that allows insertion of the first end part 41.

In a case as described below, the second engaging part 542a is formed while being joined to the housing 5 in such a way that the second engaging part 542a is shifted, due to the second protruding part 441 coming into contact, from the first position P1 at which movement of the second protruding part 441 toward the first end part accommodating part 5C is restricted, to the second position P2 at which movement of the second protruding part 441 toward the first end part accommodating part 5C is allowed. That is, (1) the flexible wiring board 4 is inserted until the first side part 43 side of the first end part 41 comes into contact with the first end part accommodating part 5C, by causing the first protruding part 431 to come into contact with the first engaging part 51c before the second protruding part 441 comes into contact with the second engaging part 542a. (2) Next, the flexible wiring board 4 is inserted such that the second side part 44 side of the first end part 41 comes into contact with the first end part accommodating part 5C. The second engaging part 542a is joined to the housing 5 such that the second engaging part 542a is shifted from the first position P1 to the second position P2 in the case described above.

The second engaging part 542a is joined to the housing 5 in such a way as to return to the first position P1 when the second side part 44 side of the first end part 41 is brought into contact with the first end part accommodating part 5C. The second engaging part 542a in the present example is joined to the housing 5 while having a cantilever shape, with the second engaging part 542a being a free end. The cantilever shape in the present example extends from the opening 51d in a direction toward the first end part accommodating part 5C.

Additionally, the regions of the first side part accommodating part 5A, the second side part accommodating part 5B, the first end part accommodating part 5C, and the accommodating cover part 5D shown in A in FIG. 6 are merely examples, and sizes and shapes of the regions shown in FIG. 6 may be changed as appropriate as long as conditions described in relation to the first side part accommodating part 5A, the second side part accommodating part 5B, the first end part accommodating part 5C, and the accommodating cover part 5D are satisfied.

### (Retainer 6)

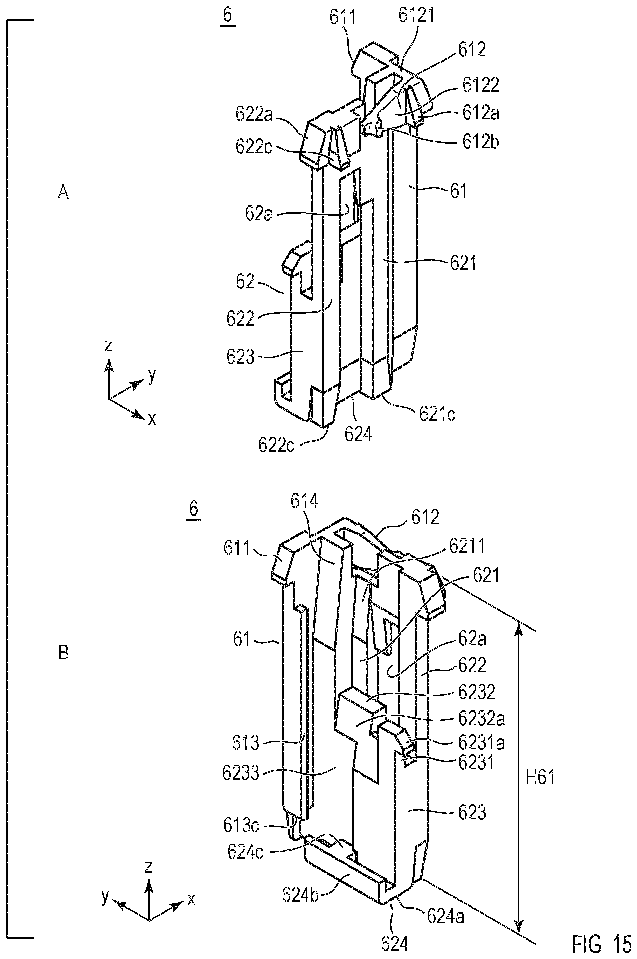

FIG. 15 is a diagram showing the retainer 6. A in FIG. 15 is a perspective view as seen from above and from an outer side. B in FIG. 15 is a perspective view as seen from above and from an inner side.

As shown in FIG. 15, the retainer 6 includes the main arm part 61 and a movement restriction part 62. For example, the retainer 6 is a molded component that uses thermoplastic resin such as ABS as a base material. The main arm part 61 and the movement restriction part 62 are joined on a lower side (-z direction side).

The main arm part 61 is a columnar member having a substantially L-shaped cross section, and extending upward (toward the opening 51d side) from a side that is made a bottom wall of the housing set 200 when attached to the housing 5. An insertion assist part 612 is provided on an end portion on an extension side (upper side) of the main arm part 61. The insertion assist part 612 includes a fixing part 6121 that protrudes toward the edge frame part 52d, and a beam part 6122 that protrudes toward the side frame part 52a side from a protruding distal end of the fixing part 6121. As a whole, the insertion assist part 612 achieves a function of a cantilever that is fixed to the main arm part 61 via the fixing part 6121. An engaging part 612a that protrudes toward the edge frame part 52d side is provided on the fixing part 6121 side of the beam part 6122. A contact part 612b that protrudes toward the edge frame part 52d side is provided near a free end side of the beam part 6122. According to such a structure, when the retainer 6 is attached to the housing 5, the contact part 612b comes into contact with a part of the housing 5, and the insertion assist part 612 is displaced toward the opening 51d side. Additionally, a guide part 613 that extends along a vertical direction (z-axis direction) is provided on an end portion on the opening 51d side (-x direction side) of the main arm part 61. Apart of a bottom surface side of the main arm part 61 and a bottom surface of the guide part 613 form a bottom part 613c that is a continuous surface. In relation to the columnar member having the substantially L-shaped cross section, a part, of the main arm part 61, forming an outer surface of the housing set 200 in the width direction includes, on an upper side, a tapered surface 614 whose thickness is reduced toward an upper side.

The movement restriction part 62 includes a restriction part 621, a sub-arm part 622, a reinforcing part 623, and a bottom surface reinforcing part 624.

The bottom surface reinforcing part 624 includes a thin plate-shaped bottom wall 624a that is made a bottom wall of the housing set 200 when the retainer 6 is attached to the housing 5, a side wall 624b that, in the present example, rises slightly upward from one end of the bottom wall 624a, and a rib 624c that reinforces the side wall 624b by protruding from the bottom wall 624a and the side wall 624b and being joined to the reinforcing part 623.

The restriction part 621, the sub-arm part 622, and the reinforcing part 623 are a columnar member that rises upward from the bottom surface reinforcing part 624.

The restriction part 621 is provided between the main arm part 61 and the sub-arm part 622. The restriction part 621 extends upward (+z direction side) from a bottom part 621c, to a height that is slightly lower than the main arm part 61. An upper end portion of the sub-arm part 622 is joined to the restriction part 621. In the present example, a hole 62a is formed by the restriction part 621, the sub-arm part 622, and the reinforcing part 623.

The sub-arm part 622 extends upward (+z direction side) from a bottom part 622c, to a same height as the main arm part 61, and an engaging part 622a and an engaging part 622b are provided at a distal end of the sub-arm part 622, the engaging part 622a protruding toward the side frame part 52a, the engaging part 622b protruding toward the edge frame part 52d.

The reinforcing part 623 extends to a height that is about half a height H61 of the main arm part 61. One end wall (+y direction side) of the reinforcing part 623 is joined to the main arm part 61, and one side wall (+x direction side) is joined to the restriction part 621 and the sub-arm part 622, and rigidity of the retainer 6 is thereby increased. Additionally, a groove 6233 is formed on the reinforcing part 623 in the present example, and a surface of the groove 6233 is continuous to a surface of the main arm part 61. On a distal end on an extension side of the reinforcing part 623, there are formed a protruding part 6232 that protrudes upward while being joined to the main arm part 61, the restriction part 621, and the sub-arm part 622, and a leg part 6231 that protrudes upward without being joined to the main arm part 61, the restriction part 621, and the sub-arm part 622. A tapered surface 6232a is provided at a distal end of the protruding part 6232, the tapered surface 6232a being formed such that a thickness of a columnar shape is reduced toward an upper side. An engaging part 6231a that protrudes toward a second arm part 541a2 side is provided at a distal end of the leg part 6231.

### (Housing Set 200)

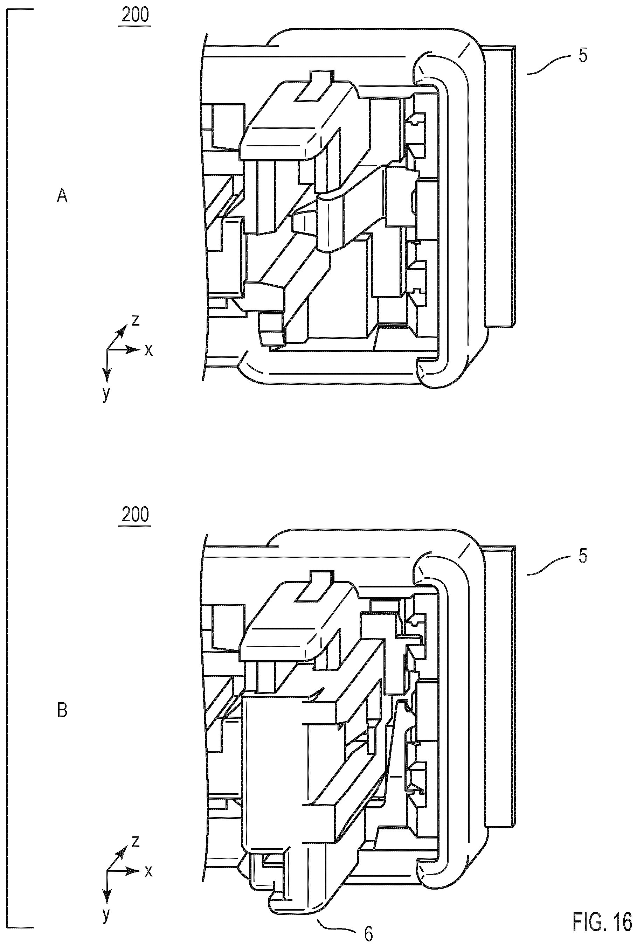

FIG. 16 is a diagram for describing a method of attaching the retainer 6. A in FIG. 16 is a perspective view, as seen from below, of the housing 5 before attachment of the retainer 6. B in FIG. 16 is a diagram as viewed from a same perspective as A in FIG. 16, and shows a state where the retainer 6 is attached and movement of the first locking arm part 542 is allowed. FIG. 17 is a bottom view of a state where the retainer 6 is attached to the housing 5. A in FIG. 17 is a diagram of a state where movement of the first locking arm part 542 is allowed. B in FIG. 17 is a diagram of a state where movement of the first locking arm part 542 is restricted. In FIG. 17, the first locking arm part 542 and the restriction part 621 that cannot be seen from outside are indicated by dotted lines to enable description of the function of the retainer 6.

The housing set 200 is assembled by attaching the retainer 6 to the housing 5. As shown in FIGS. 14 to 17, to perform attachment, insertion is performed with a distal end side (+z direction side) of the main arm part 61 facing a hole 543b, and a distal end side of the sub-arm part 622 facing a hole 543a. At this time, the contact part 612b is inserted while being in contact with a protruding part 545, and thus, the engaging part 622b is inserted into a groove 544a, the engaging part 612a is inserted into a groove 544b, and the engaging part 6231a is inserted into a hole 541a5. When insertion is further performed, the engaging parts 612a, 622b are placed above (+z direction) the grooves 544a, 544b, and are enabled to move in the short direction (y-axis direction) of the housing 5. When the retainer 6 is slid in the short direction (y-axis direction), the engaging parts 612a, 622b are brought into contact (engaged) with the housing 5 where the grooves 544a, 544b are formed, and a state is reached where the retainer 6 cannot be removed, and attachment of the retainer 6 to the housing 5 is completed.

That is, after the retainer 6 is inserted to a position at which movement in the short direction (y-axis direction) of the housing 5 is possible, the retainer 6 is slid to a third position P3 or a fourth position P4 (see FIG. 17). In the case where the retainer 6 is at the third position P3 or the fourth position P4, the retainer 6 cannot be removed from the housing 5. To remove the retainer 6 from the housing 5, the retainer 6 has to be moved to a middle position between the third position P3 and the fourth position P4. To place the retainer 6 at the middle position between the third position P3 and the fourth position P4, a person has to consciously perform operation. Accordingly, with the cable harness 100 of the present disclosure, the retainer 6 can be practically prevented from falling off. Additionally, in the case where the retainer 6 is to be moved (slid) from the third position P3 to the fourth position P4 or from the fourth position P4 to the third position P3, the contact part 612b has to be moved, while in contact with the protruding part 545, from a position on the cover 51b side (+y direction side) of the protruding part 545 to a position on the cover 51a side (-y direction side), or from the position on the cover 51a side (-y direction side) of the protruding part 545 to the position on the cover 51b side (+y direction side). At the time of the operation, a person who is causing such movement can feel displacement of the insertion assist part 612 through a so-called clicking sensation. That is, with the cable harness 100, completion of movement (sliding) of the retainer 6 can not only be visually but also tactually perceived.

For example, as shown in A in FIG. 17, in relation to the retainer 6, when the main arm part 61 is slid as much as possible toward the side frame part 52b (fourth position P4), the restriction part 621 is placed at a position where the restriction part 621 does not cover the first locking arm part 542 from an outer side in the width direction (W51 direction, W52 direction). Accordingly, the second engaging part 542a is allowed to move from the first position P1 that is a position before insertion of the flexible wiring board 4, to outside of the housing 5 in the width direction (second position P2) where the first locking arm part 542 is allowed to move as a cantilever. By contrast, as shown in B in FIG. 17, when the main arm part 61 is slid as much as possible toward the side frame part 52a (third position P3), the restriction part 621 is placed at a position where the restriction part 621 covers the first locking arm part 542 from the outer side in the width direction (W51 direction, W52 direction). Accordingly, movement of the second engaging part 542a from the first position P1 to the second position P2 is restricted. That is, with respect to the housing 5, the retainer 6 is formed to be capable of moving from the third position P3 to the fourth position P4.

In other words, the retainer 6 having the structure as described above is as follows, for example. The cable harness 100 further includes the retainer 6 that is separate from the housing 5 and that is attached to the housing 5. In relation to the housing 5, the retainer 6 is formed to be capable of moving between the fourth position P4 at which displacement of the second engaging part 542a to the second position P2 is restricted due to at least a part of the retainer 6 covering the second engaging part 542a from outside of the first width W1 of the flexible wiring board 4, and the third position P3 at which displacement of the second engaging part 542a to the second position P2 is allowed due to at least a part of the retainer 6 not covering the second engaging part 542a from outside of the first width W1.

### (Attachment of Flexible Wiring Board 4 to Housing Set 200)

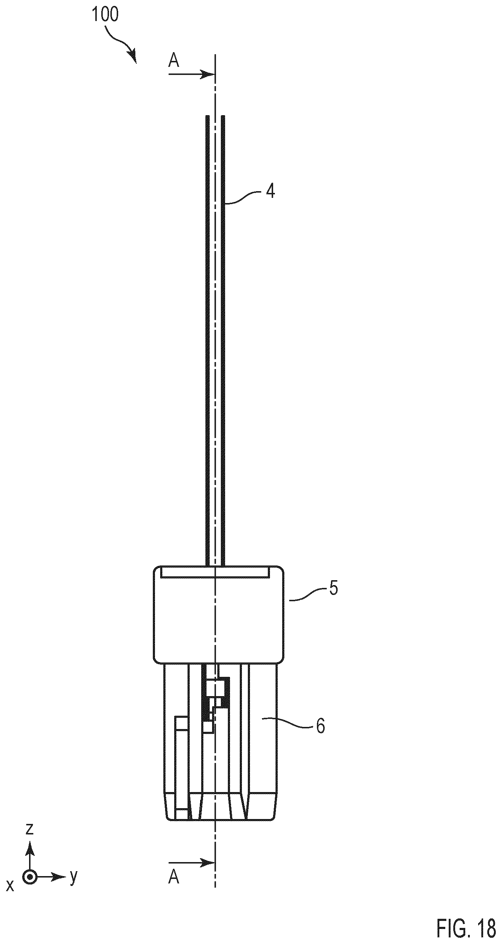

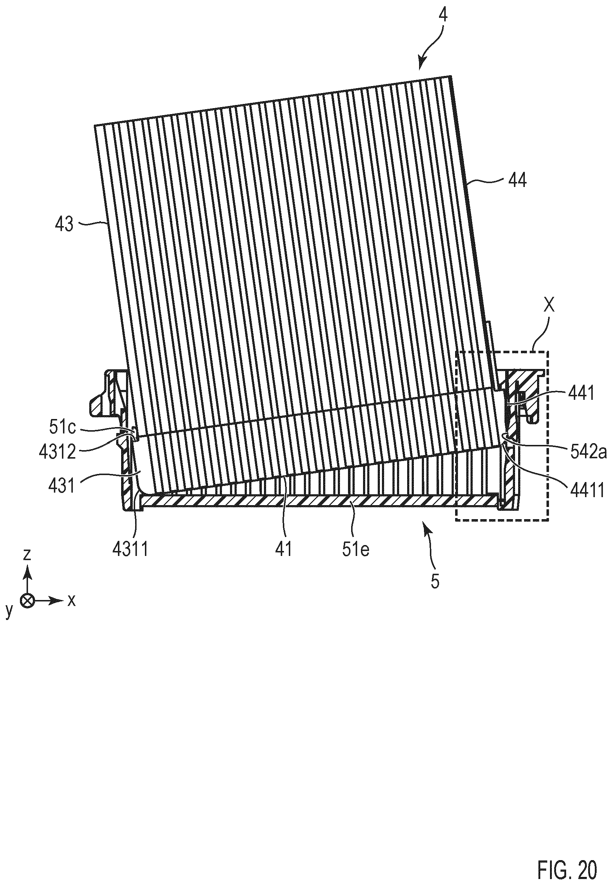

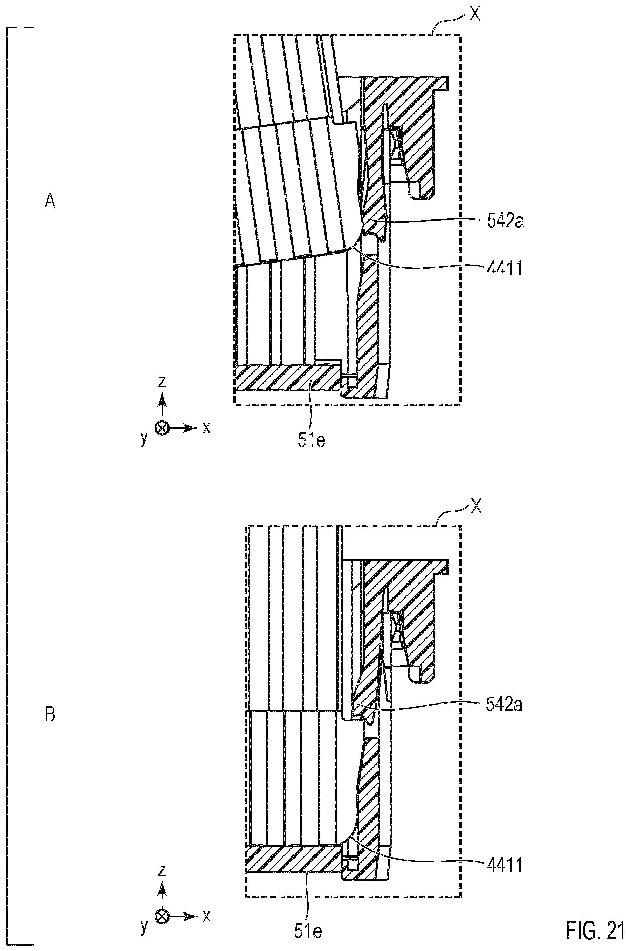

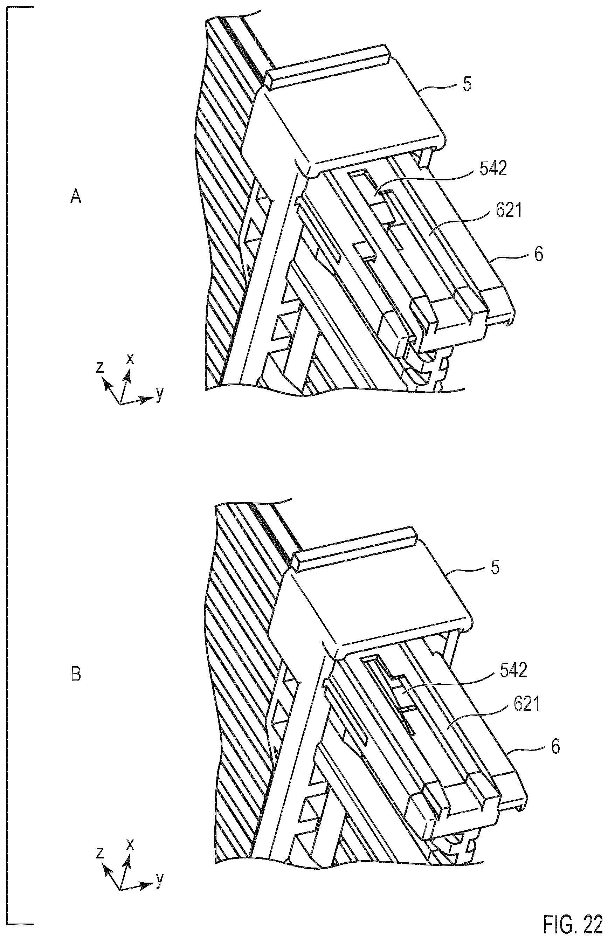

FIG. 18 is a right-side view of the cable harness 100 where movement of the first locking arm part 542 is allowed. FIG. 19 is an enlarged view of a cross-sectional view taken along A-A in FIG. 18, where a part of the cross-sectional view is omitted. FIG. 20 is a diagram showing attachment of the flexible wiring board 4 to the housing 5 in FIG. 19 by a manner corresponding to the cross-sectional view taken along A-A in FIG. 18. FIG. 21 is an enlarged view of a region X in FIG. 20. A in FIG. 21 is a diagram showing the flexible wiring board 4 that is being inserted, and B in FIG. 21 is a diagram showing a state where insertion of the flexible wiring board 4 is completed. FIG. 22 is a diagram for describing operation of the retainer 6. A in FIG. 22 is a diagram showing a state where movement of the first locking arm part 542 is allowed. B in FIG. 22 is a diagram showing a state where movement of the first locking arm part 542 is restricted. Additionally, FIG. 19 shows the flexible wiring board 4 using an external view instead of a cross-sectional view to describe functions of the first protruding part 431 and the second protruding part 441.

A length of the flexible wiring board 4 including the first protruding part 431 and the second protruding part 441 in the width direction, namely, the first width W1 (FIG. 8), is slightly greater than the length W52 (FIG. 10) of the width of the opening 51d. That is, with the cable harness 100 of the present disclosure, when the flexible wiring board 4 is inserted perpendicularly into the opening 51d, end portions of the first end part 41 come into contact with outer sides of the opening 51d, and the flexible wiring board 4 cannot be inserted. Accordingly, as shown in FIG. 20, when inserting the first end part 41 of the flexible wiring board 4 into the opening 51d of the housing 5, the flexible wiring board 4 is rotated to the right from the perspective in FIG. 20, around the first engaging part 51c, while bringing the surface 4311 into contact with an inner surface of the abutting part 51e and bringing the surface 4312 into contact with the lower surface 51cb (FIG. 19), and the surface 4411 is caused to contact the second engaging part 542a. In other words, the first protruding part 431 is brought into contact with the first engaging part 51c before the second protruding part 441 comes into contact with the second engaging part 542a, and the flexible wiring board 4 is inserted until the first side part 43 side of the first end part 41 contacts the first end part accommodating part 5C. Next, the flexible wiring board 4 is further inserted by causing the second side part 44 side of the first end part 41 to come into contact with the first end part accommodating part 5C.

The first locking arm part 542 is a cantilever where the second engaging part 542a side is a free end. The second engaging part 542a is joined to the second side part accommodating part 5B in such a way as to move, when the second protruding part 441 comes into contact, from the first position P1 (B in FIG. 14) at which movement of the second protruding part 441 toward the first end part accommodating part 5C is restricted, to the second position P2 (A in FIG. 21) at which movement of the second protruding part 441 toward the first end part accommodating part 5C is allowed.

Accordingly, as shown in FIG. 21, when the surface 4411 is brought into contact with the second engaging part 542a, the second engaging part 542a is displaced outward (+x direction side) in the width direction of the housing 5, and further insertion of the flexible wiring board 4 is allowed, and the second protruding part 441 side of the first end part 41 is also brought into contact with the abutting part 51e, and the second engaging part 542a thereby returns to the first position P1. Attachment of the flexible wiring board 4 to the housing set 200 is thus completed (FIGS. 18, 19).

In this state, even when orientation of the cable harness 100 is changed by reversal of a positional relationship between the abutting part 51e and the opening 51d, for example, the second protruding part 441 is engaged with the second engaging part 542a, and mating is not unlocked unless the flexible wiring board 4 is removed from the housing set 200 by application of a great force. Accordingly, with the cable harness 100 of the present disclosure, no major limitations are imposed on a mounting orientation. Furthermore, the arm part 54 is formed to be smaller than the arm part 53, and the first locking arm part 542 is formed as a part of the arm part 54. In other words, when the retainer 6 is attached to the arm part 54, a size combining the arm part 54 and the retainer 6 is about the same size as the arm part 53. Accordingly, with the cable harness 100 of the present disclosure, locking of the flexible wiring board and the connector may be achieved without increasing the size of the connector.

As shown in FIG. 22, after attachment of the flexible wiring board 4 to the housing set 200 is completed, the retainer 6 is slid from the third position P3 shown in A in FIG. 22 to the fourth position P4 shown in B in FIG. 22, or in other words, as much as possible toward the side frame part 52a (-y direction side). The restriction part 621 thus restricts movement to the outer side of the housing 5 in the width direction that the first locking arm part 542, as a cantilever, is capable of performing. This state is a so-called locked state, and assembly of the cable harness 100 is thus completed.

After completion of assembly of the cable harness 100, the surface 4412 contacts (engages with) the lower surface 542ab and restricts movement of removal even when a force is applied to remove the flexible wiring board 4 from the housing 5 (even when removal is performed in an opposite direction from the insertion direction).

To remove the flexible wiring board 4 from the housing 5, the retainer 6 is slid from the locked state (fourth position P4) to a state where movement is allowed (third position P3). In the state of the first position P1, the lower surface 542ab in the present example is substantially flat (substantially parallel to x-axis) from an inner side to a middle portion, and is then gradually sloped downward from the middle portion to an outer side (+x side) so as to have a hook shape for allowing insertion of a jig or a finger for releasing the locked state. Accordingly, the engagement is released by displacing the first locking arm part 542 outward in the width direction of the housing 5 by using a jig, for example. The flexible wiring board 4 can thereby be removed from the housing 5.

As shown in A in FIG. 21, in a state where the flexible wiring board 4 is not yet fully inserted into the housing 5, the first locking arm part 542 is displaced outward in the width direction. In other words, in a state where the flexible wiring board 4 is not completely or correctly attached to the housing 5, the first locking arm part 542 is displaced outward. In such a displaced state, the retainer 6 cannot move (slide) from the third position P3 to the fourth position P4. Accordingly, a state where the retainer 6 is at the fourth position P4 indicates that the flexible wiring board 4 is correctly attached to the housing 5. That is, the retainer 6 also functions as a flex position assurance (FPA) member for position compensation (mating assurance).

As described above, the retainer 6 includes the bottom parts 613c, 621c, 622c. The cable harness 100 and the mating connector 7 are structured such that, when the cable harness 100 is to be inserted into the mating connector 7 and the retainer 6 is at the third position P3, the bottom parts 613c, 621c, 622c come into contact with parts of the mating connector 7 to prevent the cable harness 100 from being deeply inserted. The mating connector 7 and the cable harness 100 are structured such that, when the cable harness 100 is to be inserted into the mating connector 7 and the retainer 6 is at the fourth position P4, the bottom parts 613c, 621c, 622c mate with predetermined portions of the mating connector 7 to allow appropriate insertion of the cable harness 100 into the mating connector 7.

In other words, with the cable harness 100 of the present disclosure, that the retainer 6 is slid to the fourth position P4 that is the locked state means that (1) the flexible wiring board 4 is appropriately attached to the housing 5, and (2) the cable harness 100 can be mated with the mating connector 7. That is, that the cable harness 100 of the present disclosure is appropriately inserted into the mating connector 7 means that (3) the retainer 6 is slid to the fourth position P4 that is the locked state, and (4) the flexible wiring board 4 that is inserted is appropriately attached to the housing 5.

Heretofore, an example embodiment of the cable harness of the present disclosure has been described. In the present embodiment, a description is given taking, as an example, the mating connector 7 where the flexible wiring board 4 is substantially vertically inserted into the printed wiring board (FIG. 4), but the mating connector 7 may be a connector where the flexible wiring board 4 is substantially horizontally inserted into the printed wiring board.

It is needless to say that the cable harness 100 and the mating connector 7 described in the present embodiment can be changed as appropriate within the scope not departing from the gist of the present disclosure.

## Claims

1. A cable harness (100) comprising a flexible wiring board (4) and a housing (5), wherein
the flexible wiring board includes
a first end part (41) having a first width,
a second end part (42) that is at a position on an opposite side from the first end part,
a first side part (43) that is one side part extending between the first end part and the second end part, the first side part including a first protruding part (431) that protrudes outward in a first width direction, and
a second side part (44) that is an other side part extending between the first end part and the second end part, the second side part including a second protruding part (441) that protrudes outward in the first width direction,
the housing includes
a first side part accommodating part (5A) capable of accommodating the first side part including the first protruding part, the first side part accommodating part including a first engaging part (51c) that protrudes inward in the first width direction and that is fixed to the housing so as not to be displaced relative to the housing,
a second side part accommodating part (5B) capable of accommodating the second side part including the second protruding part, the second side part accommodating part including a second engaging part (542a) that protrudes inward in the first width direction,
a first end part accommodating part (5C) that joins one end portion of the first side part accommodating part and one end portion of the second side part accommodating part so as to enable accommodation of the first end part, and
an accommodating cover part (5D) that at least joins a first portion, of the first side part accommodating part, which is at a position in a direction farther from the first end part accommodating part than the first engaging part, and a second portion, of the second side part accommodating part, which is at a position in a direction farther from the first end part accommodating part than the second engaging part, the accommodating cover part forming an opening that allows insertion of the first end part, and
the second engaging part is formed by being joined to the accommodating cover part in such a way that, in a case where the flexible wiring board is inserted until the first side part side of the first end part comes into contact with the first end part accommodating part, by causing the first protruding part to come into contact with the first engaging part before the second protruding part comes into contact with the second engaging part, and then the flexible wiring board is inserted such that the second side part side of the first end part comes into contact with the first end part accommodating part, the second engaging part is shifted, due to the second protruding part coming into contact, from a first position at which movement of the second protruding part toward the first end part accommodating part is restricted, to a second position at which movement of the second protruding part toward the first end part accommodating part is allowed.

2. The cable harness according to Claim 1, wherein the second engaging part is formed to return to the first position in a case where the second side part side of the first end part is brought into contact with the first end part accommodating part.

3. The cable harness according to Claim 1, further comprising a retainer (6) that is separate from the housing and that is attached to the housing, wherein
in relation to the housing, the retainer is formed to be capable of moving between a fourth position at which displacement of the second engaging part to the second position is restricted due to at least a part of the retainer covering the second engaging part from outside of the first width, and a third position at which displacement of the second engaging part to the second position is allowed due to at least a part of the retainer not covering the second engaging part from outside of the first width.

4. The cable harness according to Claim 1, wherein the second engaging part is joined to the housing while having a cantilever shape where the second engaging part is a free end.

5. The cable harness according to Claim 4, wherein the cantilever shape extends in a direction from the opening toward the first end part accommodating part.

6. A housing (5) allowing insertion of a flexible wiring board (4) , wherein
the flexible wiring board includes
a first end part (41) having a first width,
a second end part (42) that is at a position on an opposite side from the first end part,
a first side part (43) that is one side part extending between the first end part and the second end part, the first side part including a first protruding part (431) that protrudes outward in a first width direction, and
a second side part (44) that is an other side part extending between the first end part and the second end part, the second side part including a second protruding part (441) that protrudes outward in the first width direction,
the housing includes
a first side part accommodating part (5A) capable of accommodating the first side part including the first protruding part, the first side part accommodating part including a first engaging part (51c) that protrudes inward in the first width direction,
a second side part accommodating part (5B) capable of accommodating the second side part including the second protruding part, the second side part accommodating part including a second engaging part (542a) that protrudes inward in the first width direction,
a first end part accommodating part (5C) that joins one end portion of the first side part accommodating part and one end portion of the second side part accommodating part so as to enable accommodation of the first end part, and
an accommodating cover part (5D) that at least joins a first portion, of the first side part accommodating part, which is at a position in a direction farther from the first end part accommodating part than the first engaging part, and a second portion, of the second side part accommodating part, which is at a position in a direction farther from the first end part accommodating part than the second engaging part, the accommodating cover part forming an opening that allows insertion of the first end part, and
the second engaging part is formed by being joined to the accommodating cover part in such a way that, in a case where the flexible wiring board is inserted until the first side part side of the first end part comes into contact with the first end part accommodating part, by causing the first protruding part to come into contact with the first engaging part before the second protruding part comes into contact with the second engaging part, and then the flexible wiring board is inserted such that the second side part side of the first end part comes into contact with the first end part accommodating part, the second engaging part is shifted, due to the second protruding part coming into contact, from a first position at which movement of the second protruding part toward the first end part accommodating part is restricted, to a second position at which movement of the second protruding part toward the first end part accommodating part is allowed.

7. The housing according to Claim 6, wherein the second engaging part is formed to return to the first position in a case where the second side part side of the first end part is brought into contact with the first end part accommodating part.

8. The housing according to Claim 6, wherein the second engaging part is joined to the housing while having a cantilever shape where the second engaging part is a free end.

9. The housing according to Claim 8, wherein the cantilever shape extends in a direction from the opening toward the first end part accommodating part.

10. A housing set comprising the housing according to Claim 6, and a retainer (6) that is separate from the housing and that is attachable to the housing, wherein
in relation to the housing, the retainer is formed to be capable of moving between a fourth position at which displacement of the second engaging part to the second position is restricted due to at least a part of the retainer covering the second engaging part from outside of the first width, and a third position at which displacement of the second engaging part to the second position is allowed due to at least a part of the retainer not covering the second engaging part from outside of the first width.
